# EUROPÄISCHE PATENTSCHRIFT

(11) **EP 2 674 351 B1**
(45) Veröffentlichungstag und Bekanntmachung des Hinweises auf die Patenterteilung: **08.08.2018**
(21) Anmeldenummer: 12405055.0
(22) Anmeldetag: 12.06.2012
(51) Int. Cl.: B62D 49/06, B62D 51/00, B62D 51/06, A01B 3/08, A01B 33/02, B62K 23/04, B60K 17/04

(54) **Selbstfahrende, wenigstens einachsige Arbeitsmaschine**
Self-propelled work machine with at least one axle
Machine de travail autotractée avec au moins un essieu

(43) Veröffentlichungstag der Anmeldung: 18.12.2013
(73) Patentinhaber: Rapid Technic AG, 8956 Killwangen (CH)
(72) Erfinder: Estermann, Reto, 5400 Baden (CH); Häfeli, Christian, 6332 Hagendorn (CH)
(74) Vertreter: Fenner, Werner

(56) Entgegenhaltungen:
- EP-A1- 2 192 036
- CN-U- 201 980 307
- DE-A1-102004 015 277
- DE-U1-202007 005 718
- GB-A- 647 443

## Beschreibung

Die Erfindung betrifft eine selbstfahrende, wenigstens einachsige Arbeitsmaschine zum Betreiben und/oder Fortbewegen von angebauten Arbeitsgeräten und/oder angehängten Fahrzeugen, welche Arbeitsmaschine eine mit einem Verbrennungsmotor antriebsverbundene, hydrostatische Antriebseinrichtung aufweist, die durch angetriebenen Rädern einer Fahrachse zugeordnete Hydraulikmotoren und einer mit einer Steuervorrichtung und den Hydraulikmotoren durch ein Stellglied steuerbar verbundene Hydraulikpumpe ausgebildet ist, wobei die Arbeitsmaschine vorzugsweise in eine Vorwärts- oder in eine Rückwärtsfortbewegungsrichtung schaltbar ist und zur manuellen Führung eine aus zwei, jeweils einer Hand einer Bedienungsperson zugeordnete, letzterer zugewandte, an den freien Enden von auslegerartig angeordneten Lenkholmen einer Lenkanordnung befestigte Bedienungshandgriffe aufweist, wobei die Lenkholme jeweils an den von den Bedienungshandgriffen abgewandten Enden an einem eine quer zur Fortbewegungsrichtung angeordnete Fahrachse aufweisenden Fahrgestell befestigt sind, und an wenigstens einem der Lenkholme, resp. mit dem Fahrgestell verbunden, ein manuell bedienbares Betätigungsorgan einer mit der Steuervorrichtung verbundenen und auf die Antriebseinrichtung einwirkenden Einstell- und Verstellvorrichtung zur Einstellung oder Änderung der Fortbewegungsrichtung der Arbeitsmaschine angeordnet ist.

Arbeitsmaschinen dieser Art lassen sich bekanntlich mit einem Verbrennungsmotor betreiben, und zu ihrer manuellen Bedien- und Lenkbarkeit sind vorzugsweise zwei Lenkholmen vorgesehen, die an dem der Bedienungsperson zugewandten Ende als Bedienungshandgriff ausgebildet sind.

Arbeitsmaschinen der eingangs beschriebenen Art werden sowohl in der Landtechnik, dem Landschafts- und Gartenbau, in kommunalen Betrieben und zum Transport wie auch in der Forstwirtschaft benutzt.

Sie eignen sich in ebenem wie auch in unebenem Gelände zum Mähen von Halmgut, zur Bodenbearbeitung und zur Räumung von Schnee, oder als Zugfahrzeug eines Anhängers resp. eines Treibachsanhängers.
Zum Antrieb der angebauten Einrichtungen, wie beispielsweise Mähwerke oder Mähbalken, Heuwerbungs- oder Bodenbearbeitungsgeräte, Schneefräsen oder - pflüge sowie Anhänger ist eine Zapfwelle vorgesehen, die mit einer hydrostatischen Antriebseinheit verbunden bzw. gekuppelt ist, welche durch eine Hydraulikpumpe und Hydraulikmotoren für den Antrieb der Räder an der Fahrachse der Arbeitsmaschine antriebsverbunden ist.

Solche Arbeitsmaschinen mit hydrostatisch angetriebener Fahrachse zur stufenlosen Geschwindigkeitsregulierung werden über Lenkholme geführt bzw. gelenkt. Die Fortbewegung der Arbeitsmaschine nach einer Seite oder geradeaus wird durch die den Hydraulikmotoren der Räder einer Fahrachse zugeführten unterschiedlichen bzw. gleichen Ölmengen erreicht.

Die Fahrachse der eingangs beschriebenen Arbeitsmaschine könnte nach dem in der CH 696511 A5 offenbarten Prinzip ausgestaltet sein, das zur Lenkung oder Führung der Arbeitsmaschine aus zwei jeweils seitlich des Fahrgestells angeordneten, die Fahrachse der Arbeitsmaschine bildenden Achsstummeln besteht, wobei jedem Achsstummel für den Radantrieb ein durch ein Ventil gesteuerter Hydraulikmotor zugeordnet ist.

Die DE 20 2007 05718 U1 offenbart ein Antriebsaggregat für gärtnerische oder landwirtschaftliche Arbeitsgeräte, für eine eingangs beschriebene, gattungsgleiche Arbeitsmaschine.

Die EP 2 192 036 A1 beschreibt ein eine an einem Lenker betätigbare Handsteuerung eines Motorrades resp. einen an einem Ende einer Lenkstange eines Motorrades drehbaren Griff, mit dem das Antriebsdrehmoment des Motors zu bestimmen ist.

Es stellt sich die Aufgabe an die Erfindung, eine Arbeitsmaschine der eingangs beschriebenen Art zu schaffen, zu deren Betrieb eine hohe Arbeitssicherheit und Zuverlässigkeit der Funktionen für Mensch, Maschine und Umgebung gewährleistet wird, vornehmlich wenn die Arbeitsmaschine in schwer zugänglich und befahrbaren Gebieten, beispielsweise in steilen Hanglagen betrieben wird, wo die Bedienungsperson zu grosser Aufmerksamkeit und Ausdauer gefordert ist.

Erfindungsgemäss wird die Aufgabe dadurch gelöst, dass die aus einem ein Magnetfeld erzeugenden Permanentmagnet und einem diesem von dem Magnetfeld beeinflussten, berührungslos gegenüberstehenden elektronischen Sensor gebildete Einstell- und Verstellvorrichtung ein mit dem Betätigungsorgan antriebsverbundenes **Winkelgetriebe oder ein aus Zahnritzeln bestehendes Vorgelege** aufweist, an deren angetriebenem **Kegelrad resp. Zahnritzel** der Permanentmagnet zur Beeinflussung wenigstens eines berührungslos angenäherten und mit der Steuervorrichtung elektrisch verbundener Sensor befestigt ist.

Als geeignet für die vorliegende Anwendung erweist sich u.a. das Hall' sehe Prinzip, auch Hall-Generator bezeichnet, bei dem in einer Hall-Sonde durch einen Strom (Steuerstrom) und ein Magnetfeld eine Spannung erzeugt resp. verändert wird. Hall-Sonden sind bei der Messung von Magnetfeldern und als kontaktlose Signalgeber bekannt.
Induktive-, kapazitive- und Piezo-Sensoren sind für die vorgeschlagene Einstell- und Verstellvorrichtung auch denkbar.

Die konstruktive Massnahme dient einer schonenden Arbeitsausübung sowie der stellvorrichtung,
- Fig. 4: eine alternative Ausführungsform einer erfindungsgemässenEinstell- und Verstellvorrichtung,
- Fig. 5: eine Draufsicht der in Fig. 4 gezeigten Einstell- und Verstellvorrichtung,
- Fig. 6: eine weitere alternative Ausführungsform einer erfindungsgemässen Einstell- und Verstellvorrichtung,
- Fig.7: eine Seitenansicht der in Fig. 6 veranschaulichten Einstell- und Verstellvorrichtung,
- Fig. 8: eine Draufsicht der in den Fig. 6 und 7 gezeichneten Ein- und Verstellvorrichtung,
- Fig. 9: eine sich von den oben genannten unterscheidende Ausführungsform einer erfindungsgemässen Einstell- und Verstellvorrichtung,
- Fig. 10: eine Seitenansicht der in Fig. 9 dargestellten Ein- und Verstellvorrichtung,
- Fig.11: eine Draufsicht der in den Fig. 9 und 10 festgehaltenen Ein- und Verstellvorrichtung,
- Fig. 12: eine von den oben erwähnten abweichende Ausführungsform einer erfindungsgemässen Einstell- und Verstellvorrichtung,
- Fig. 13: eine Seitenansicht der in Fig. 12 gezeigten Ein- und Verstellvorrichtung,
- Fig. 14: eine Seitenansicht einer alternativen Ausführungsform einer erfindungsgemässen Einstell- und Verstellvorrichtung und
- Fig. 15: eine Seitenansicht einer weiteren Ausführungsform einer erfindungsgemässen Einstell- und Verstellvorrichtung für eine Arbeitsmaschine.

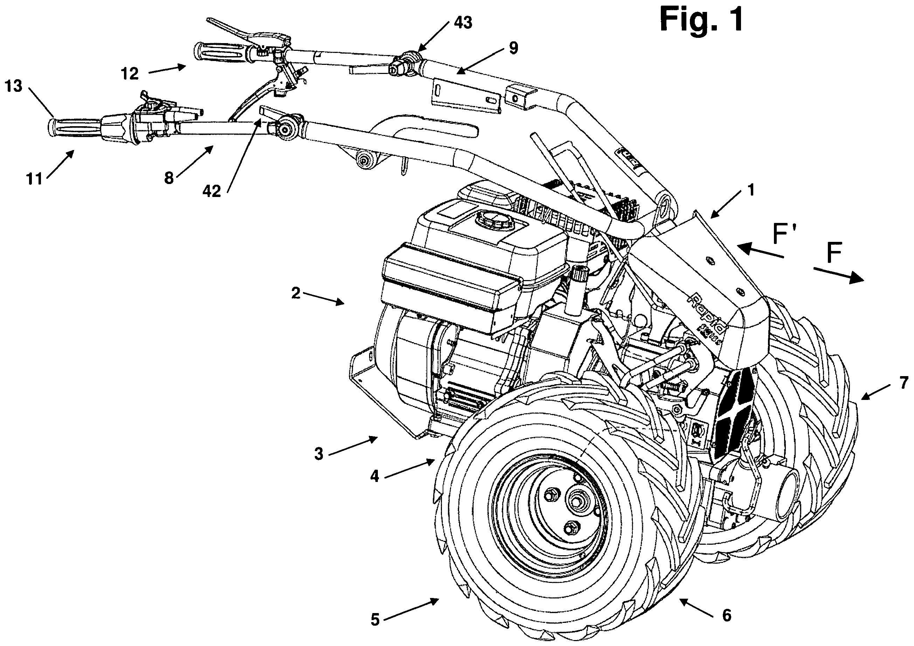

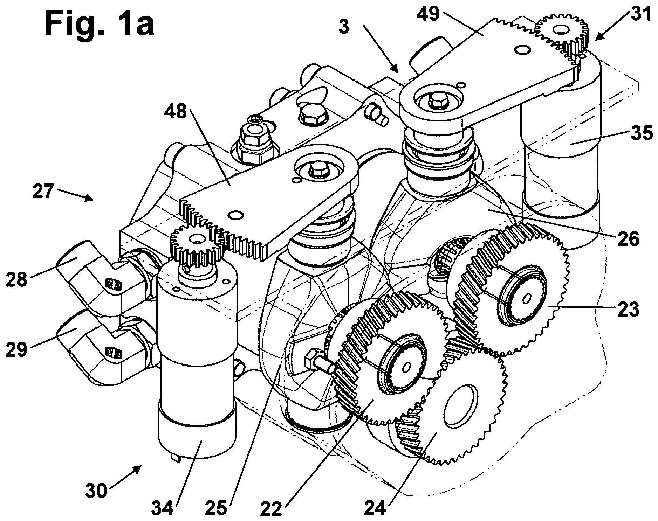

Fig. 1 zeigt eine zum Stand der Technik gehörende, selbstfahrende, einachsige Arbeitsmaschine 1 für das Betreiben und Fortbewegen von front- und/ oder heckseitig angebauten und zuschaltbaren Arbeitsgeräten (nicht sichtbar), die eine mit einem Antriebsmotor, vorzugsweise einem Verbrennungsmotor 2 antriebsverbundene, hydrostatische Antriebseinheit 3 aufweist, mit der die an einer mit einem Fahrgestell 4 verbundenen Fahrachse 5 befestigten Antriebsräder 6, 7 und die angebauten Arbeitsgeräte wahlweise mechanisch oder hydraulisch antreibbar sind. Die Arbeitsmaschine kann sowohl in Richtung F vorwärts als auch in der Gegenrichtung F' fortbewegt resp. fahrbar verstellt werden. Selbstverständlich könnte der Antriebsmotor auch als Elektromotor ausgebildet sein.

Zur Führung oder Lenkung resp. zur Bedienung durch eine die Arbeitsmaschine 1 begleitende Bedienungsperson sind Lenkholme 8 und 9 einer sich etwa V-förmig erstreckenden Lenkanordnung vorgesehen, die mit dem Fahrgestell 4 der Arbeitsmaschine 1 verbunden sind.

Die auslegerartigen Lenkholme 8, 9 weisen an den abstehenden, freien, der Bedienungsperson zugewandten Enden jeweils einen Bedienungshandgriff 11, 12 zur manuellen Führung resp. zum Lenken und zur Betätigung der Arbeitsmaschine 1 resp. der Arbeitsgeräte auf. Das Lenken der Arbeitsmaschine erfolgt durch die Bedienungsperson mittels einer Steuervorrichtung S über die hydrostatische Antriebseinheit 3 auf die jeweils mit einem von einer Hydraulikpumpe versorgten Hydraulikmotor ausgestatteten Antriebsräder 6, 7 einer Fahrachse 5 der Arbeitsmaschine 1, an deren der Bedienungsperson abgewandten Vorderseite eine einschalt- und abschaltbare Zapfwelle 15 zur Koppelung der angebauten Arbeitsgeräte angeordnet ist. Der von der Bedienungsperson aus betrachtet linke Bedienungshandgriff 12 des Lenkholms 9 ist mit einem durch die linke Hand zu betätigenden Kupplungshebel und am rechten Bedienungshandgriff 11 mit einem auf die Antriebsräder 6, 7 wirkenden Feststellhebel einer Feststellbremse (nicht ersichtlich) ausgerüstet, die hier nicht beschrieben, jedoch bekannt ist.

Fig. 1 zeigt an den Lenkholmen 8, 9 eine vorliegend nicht beschriebene Feststellvorrichtung 42, 43 zur ergonomischen Anpassung der Lenkholme 8, 9 an die Körpergrösse einer Bedienungsperson.

Fig. 1a stellt eine Antriebseinrichtung 3 einer Arbeitsmaschine 1 dar, die zwischen Antriebsmotor 2 und Zapfwelle 15 an dem Fahrgestell 4 der Arbeitsmaschine 1 befestigt ist. Die Antriebseinrichtung 3 besteht an dem der Zapfwelle 15 zugewandten vorderen Ende aus Zahnrädern 22, 23, die von einem an einer Hauptantriebswelle (nicht ersichtlich) befestigten Antriebszahnrad 24 angetrieben sind. An der mit dem Antriebsmotor 2 verbundenen Hauptantriebswelle ist auch ein Zahnrad zum Antrieb der Zapfwelle befestigt, wobei die Hauptantriebswelle mit der Antriebsmotorwelle durch eine manuell zuschaltbare Kupplung verbunden ist.

Die Zahnräder 22, 23 treiben jeweils eine den Antriebsrädern 6, 7 der Fahrachse 5 der Arbeitsmaschine 1 zugeordnete Hydraulikpumpe 25, 26 an.

An die rückwärtige Seite der Hydraulikpumpen 25, 26 anschliessend ist mit diesen ein Verteilblock 27 für die den Hydromotoren zu- und rückzuführende Hydraulikflüssigkeit fest verbunden.

Weiterhin erkennbar sind in Fig. 1a zwei der Hydraulikpumpe 25 zugeordnete winkelförmige Verschraubungen 28, 29 von einen Hydraulikmotor eines Antriebsrades 6, 7 mit der Hydraulikpumpe 25 verbindenden Hydraulikleitungen (nicht ersichtlich). Die hydrostatische Antriebseinrichtung 3 besteht aus zwei gleichartigen, unabhängig steuerbaren Antriebseinheiten 30, 31, denen jeweils ein Hydraulikmotor eines Antriebsrades 6, 7 der Fahrachse 5 und eine einstell- und verstellbare Hydraulikpumpe 25, 26 zugeordnet ist.

Die hydrostatischen Antriebeinheiten 30, 31 weisen jeweils eine ein- und verstellbare Hydraulikpumpe 25, 26 auf, die zur Ein- und Verstellbarkeit der Fördermenge der hydraulischen Flüssigkeit mit einer Steuervorrichtung S steuerbar verbunden ist. Hierzu weist jede Antriebseinheit 30, 31 einen drehwinkelgesteuerten Elektromotor 34, 35 auf, der über die Steuervorrichtung S an eine mit einer Stromquelle, beispielsweise eine Batterie oder ein Akkumulator angeschlossen ist. Zur Verstellung der Hydraulikpumpen 25, 26 ist ein Zahnritzel an der Antriebswelle eines Elektromotors 34, 35 befestigt, das mit einem an einer Verstellwelle eines Verstellorgans der Hydraulikpumpe 25, 26 befestigten Zahnradsegment 48, 49 kämmt. Die EP 11405376.2 vermittelt weitere Einzelheiten zur Ein- und Verstellbarkeit der Hydraulikpumpe einer hydrostatischen Antriebseinheit einer einachsigen Arbeitsmaschine.

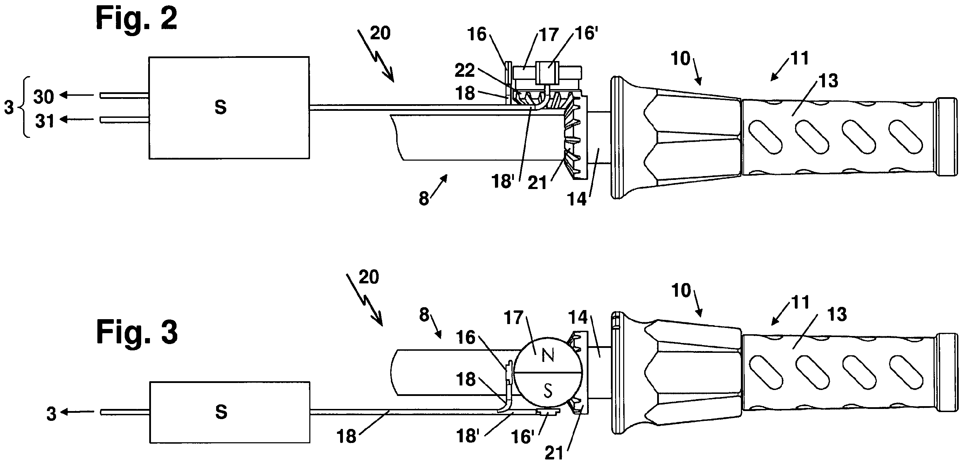

Die Figuren 2 und 3 zeigen eine Ausführung der vorliegenden Erfindung im Bereich eines Bedienungshandgriffes 11, 12 eines Lenkholms 8, 9, vorzugsweise dem von der Bedienungsperson aus betrachtet rechten Lenkholm 8, an dessen der Bedienungsperson zugewandten Ende ein Handgriff 13 befestigt ist. Vor dem Handgriff 13 ist an dem Lenkholm 8 ein Betätigungsorgan 10 einer Einstell- und Verstellvorrichtung 20 drehbar gelagert und mit einem Kegelrad 21 fest verbunden, wozu ein auf dem Lenkholm 8 gelagertes Verbindungselement 14 vorgesehen ist. Das Kegelrad 21 kämmt mit einem weiteren Kegelrad 22, das mit ersterem ein Winkelgetriebe 23 bildet. Kegelrad 22 weist eine senkrecht zur Drehachse des Kegelrades 21 stehende Achse auf und ist in einem nicht dargestellten Lager an dem Lenkholm 8 angeordnet. An der von Lenkholm 8 abgewandten Stirnseite des Kegelrades 22 ist ein scheibenförmiger, ein magnetisches Streufeld resp. ein Magnetfeld erzeugender Permanentmagnet 17 befestigt, an dessen Umfang im Winkelabstand von 90° zwei Sensoren 16, 16' berührungslos positioniert sind. Durch eine Drehbewegung des Betätigungsorgans 10 ändert sich die Lage des Magnetfeldes und bewirkt gleichzeitig an den Sensoren 16, 16' phasenversetzte Signale, die über die elektrischen Leitungen 18, 18' an die Steuervorrichtung S übertragen werden. Der in der Steuervorrichtung S aus den Signalen mittels Mikroprozessor errechnete Wert resp. Differenzwert wird in der Folge zur Änderung der Antriebseinrichtung 3 resp. zur Änderung der Fortbewegungsrichtung und -geschwindigkeit der Arbeitsmaschine 1 verwendet.

Diesbezüglich wird wiederum auf die Fig. 1a hingewiesen, die eine hydrostatische Antriebseinrichtung 3 veranschaulicht, welche durch Elektromotoren 34, 35 der Antriebseinheiten 30, 31 zur Verstellung der den Rädern 6, 7 zugeordnete Hydraulikpumpen 25, 26 mit der Steuerung S verbunden sind.

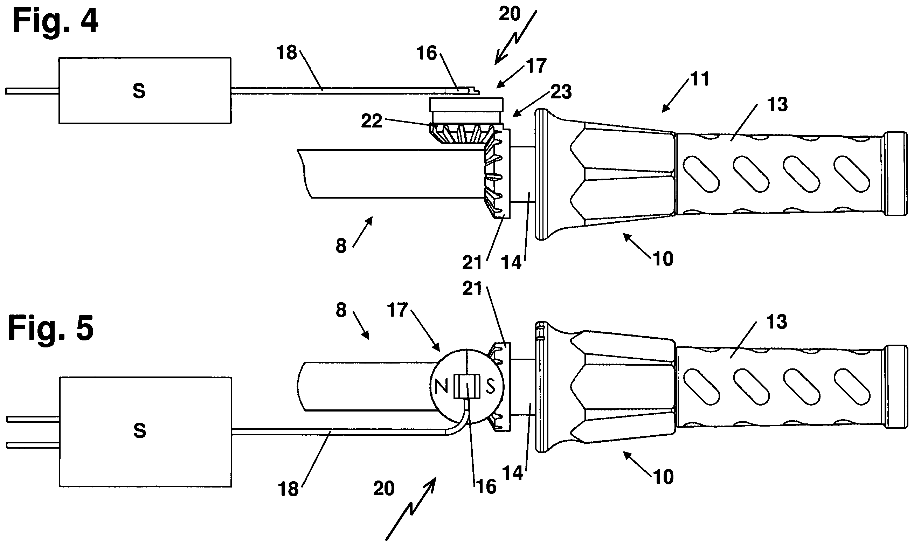

Die Fig. 4 und 5 zeigen eine alternative Ausführungsform einer Einstell- und Verstellvorrichtung 20, die im Unterschied zur Ausführungsform nach den Fig. 2 und 3 einen Sensor 16 oberhalb des Permanentmagneten 17 und berührungslos zu diesem aufweist. Der Sensor 16 reagiert auf das durch Kegelrad 22 verdrehbare Magnetfeld und ist mit der schematisch dargestellten Steuervorrichtung S leitungsverbunden und durch einen nicht sichtbaren Halter an dem Lenkholm 8 befestigt. Die vom Sensor 16 in der Steuervorrichtung S aufgenommenen und verasrbeiteten Signale werden entsprechend an die Antriebseinheiten 30, 31 der Antriebseinrichtung 3 zur Steuerung der Hydraulikpumpen 25, 26 resp. der Fortbewegungsrichtung der Arbeitsmaschine 1 weiter übertragen.

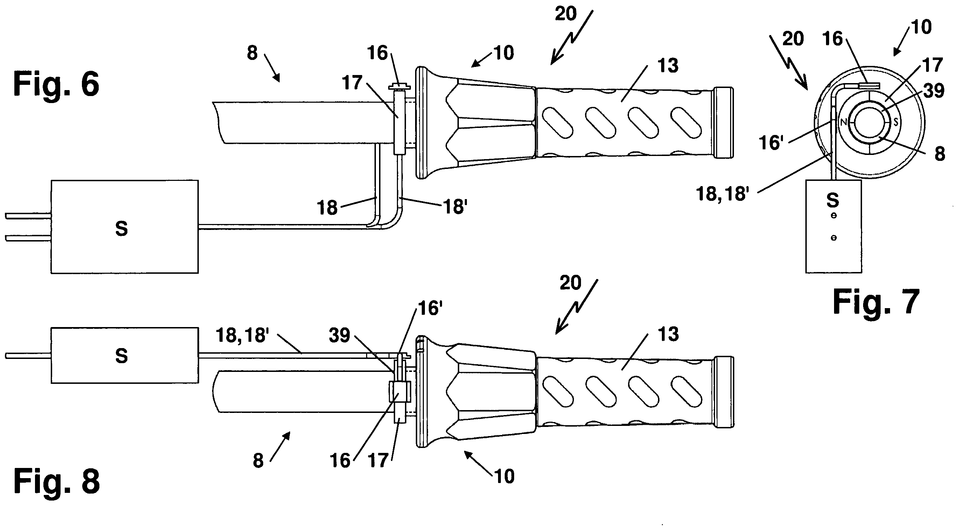

Die Fig. 6 bis 8 zeigen eine Einstell- und Verstellvorrichtung 20, bei der ein an dem Umfang eines mit dem drehbaren Betätigungsorgan 10 verbundener Tragring 39, an dessen Umfang ein ringförmiger Permanentmagnet 17 befestigt ist. Zwei an dem Lenkholm 8 befestigte Sensoren 16, 16' stehen berührungslos gegenüber und sind in einem Winkelabstand von 90° zueinander versetzt angeordnet. Beide Sensoren 16, 16' sind durch Leitungen 18, 18' mit der Steuerung S verbunden, die die Signale der Sensoren 16, 16' vorerst auswertet und das Ergebnis anschliessend an die Antriebseinheiten 30, 31 einer Antriebseinrichtung 3 transferiert.

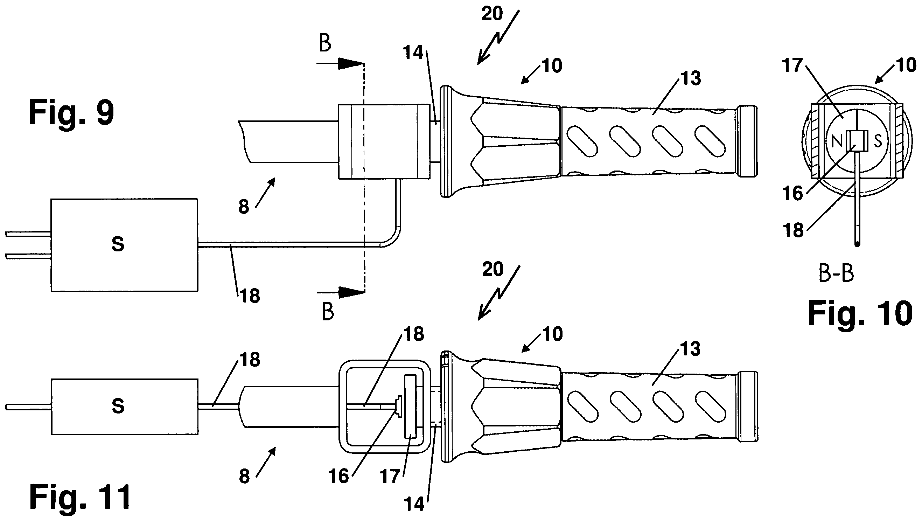

Die Fig. 9 bis 11 stellen eine Einstell- und Verstellvorrichtung 20 dar, bei der der Drehgriff resp. das Betätigungsorgan 10 ein den Permanentmagneten 17 haltendes Verbindungselement 14 aufweist und von einem schützenden Rahmenteil 19 umgeben ist. Ein in der Drehachse des Betätigungsorgans 10 angeordneter Sensor 16 steht berührungslos dem Permanentmagneten 17 gegenüber und ist durch Leitung 18 mit der Steuervorrichtung S verbunden.

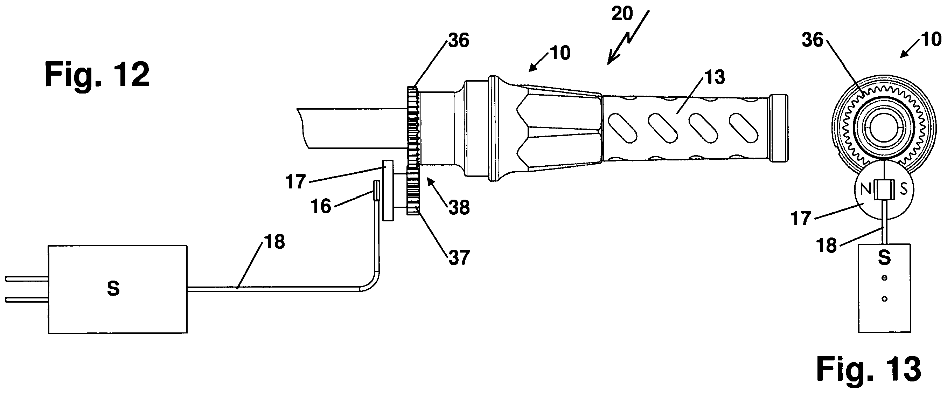

Die Fig. 12 und 13 veranschaulichen eine Einstell- und Verstellvorrichtung 20, bei der das an dem Lenkholm 8 gelagerte Betätigungsorgan 10 an dem vorderen Ende ein befestigtes Zahnrad 40 aufweist, das mit einem weiteren Zahnrad 41 kämmt, an dem ein Permanentmagnet 17 befestigt ist, gegenüber dem ein durch eine Leitung 18 mit der Steuerung S verbundener Sensor 16 berührungslos angeordnet ist. Die nicht sichtbare Befestigungsvorrichtung zur Lagerung des Zahnrades 41 ist durch ein an dem Lenkholm 8 befestigten Gehäuse oder dgl. vorgesehen.

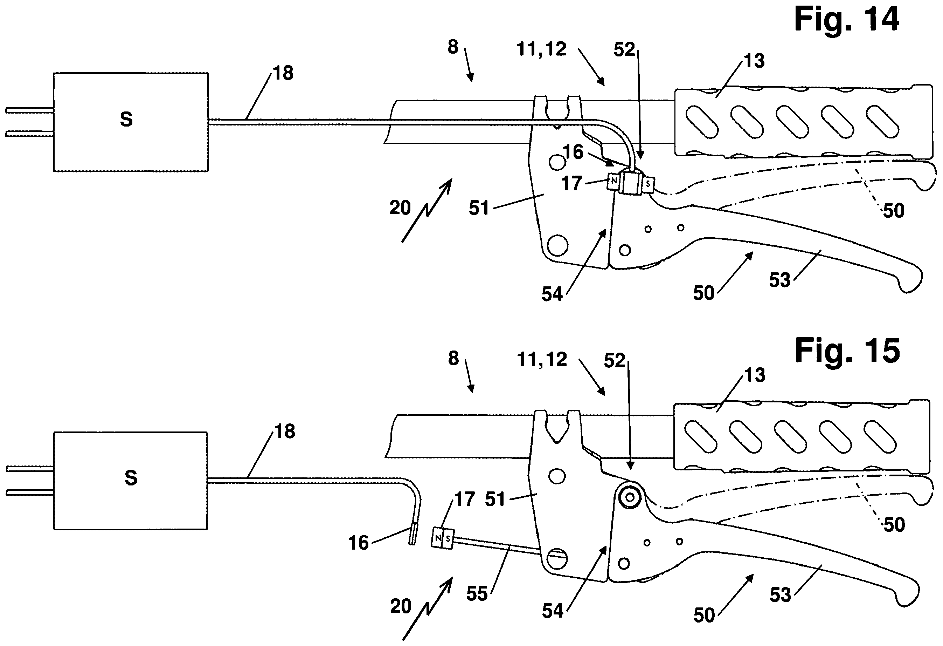

Die Fig. 14 zeigt eine Ausführungsform der Einstell- und Verstellvorrichtung 20, die sich von den oben beschriebenen Ausführungsformen durch einen Handhebel 50 als Betätigungsorgan 10 unterscheidet. Die von einer Hand zu umfassenden Handgriff 13 und Griffabschnitt 53 des Handhebels 50 bewirken bei einer Schliessbewegung der Hand eine sukzessiv eintretende Änderung der Lage zwischen dem ortsfesten Sensor 16, der an einem mit dem Lenkholm 8, 9 verbundenen Support 51 befestigt ist, und dem ein um eine vorzugsweise horizontal ausgerichtete Schwenkachse 52 des Handhebels 50, an diesem befestigter Permanentmagnet 17 berührungslos gegenüberstehend und drehbar zugeordnet ist. Bei seiner grössten Wirkung befindet sich der Handhebel 50 nach der strichpunktierten Linie im Anschlag an Handgriff 13. Die Rückstellung des Handhebels 50 in die Ausgangsposition erfolgt beispielsweise durch eine nicht ersichtliche Feder.

Alternativ zu dieser Ausführungsform könnten Sensor 16 und Permanentmagnet 17 auf Support 51 und Handhebel 50 vertauscht befestigt sein.

Fig. 15 veranschaulicht eine Einstell- und Verstellvorrichtung 20, die ebenfalls mit einem Handhebel 50 zu betätigen ist, der um eine vorzugsweise horizontale Schwenkachse 52 gelagert ist. Die Fig. 15 zeigt den Handhebel 50 an einem Anschlag 54 in seiner Ausgangsposition. Bei seiner grössten Wirkung befindet sich der Handhebel 50 nach der strichpunktierten Linie im Anschlag an Handgriff 13. Die Rückstellung des Handhebels 50 in die Ausgangsposition erfolgt beispielsweise durch eine nicht ersichtliche Feder. Der auf einen ortsfest angeordneten Sensor 16 einwirkende und durch Abstandsänderungen die Steuervorrichtung S beeinflussende Permanentmagnet 17 ist durch eine Stange 55 an dem Handhebel 50 befestigt, durch dessen Bewegung der Abstand zwischen Sensor 16 und Permanentmagnet 17 resp. der Einfluss des Magnetfeldes verändert wird.

## Patentansprüche

1. Selbstfahrende, wenigstens einachsige Arbeitsmaschine (1) zum Betreiben und/oder Fortbewegen von angebauten Arbeitsgeräten und/oder angehängten Fahrzeugen, welche Arbeitsmaschine (1) eine mit einem Verbrennungsmotor antriebsverbundene, hydrostatische Antriebseinrichtung (3) aufweist, welche durch angetriebenen Rädern (6, 7) einer Fahrachse (5) zugeordnete Hydraulikmotoren (13, 14) und einer mit einer Steuervorrichtung (S) und den Hydraulikmotoren (13, 14) durch ein Stellglied steuerbar verbundene Hydraulikpumpe (25, 26) ausgebildet ist, wobei die Arbeitsmaschine (1) vorzugsweise in eine Vorwärts (F)- oder in eine Rückwärtsfortbewegungsrichtung (F') schaltbar ist und zur manuellen Führung eine aus zwei, jeweils einer Hand einer Bedienungsperson zugeordnete, letzterer zugewandte, an den freien Enden von auslegerartig angeordneten Lenkholmen (8, 9) einer Lenkanordnung befestigte Bedienungshandgriffe (11, 12) aufweist, wobei die Lenkholme (8, 9) jeweils an den von den Bedienungshandgriffen (11, 12) abgewandten Enden mit einem eine quer zur Fortbewegungsrichtung angeordnete Fahrachse (5) aufweisenden Fahrgestell (4) befestigt sind und wobei an wenigstens einem der Lenkholme (8, 9) resp. mit dem Fahrgestell (4) verbunden, ein manuell bedienbares Betätigungsorgan (10) einer mit der Steuervorrichtung (S) verbundenen und auf die Antriebseinrichtung (3) einwirkenden Einstell- und Verstellvorrichtung (20) zur Einstellung oder Änderung der Fortbewegungsrichtung und -geschwindigkeit der Arbeitsmaschine (1) angeordnet ist, **dadurch gekennzeichnet, dass** die aus einem ein Magnetfeld erzeugenden Permanentmagnet (17) und einem diesem von dem Magnetfeld beeinflussten, berührungslos gegenüberstehenden elektronischen Sensor (16) gebildete Einstell- und Verstellvorrichtung (20) ein mit dem Betätigungsorgan (10) antriebsverbundenes **Winkelgetriebe (23) oder ein aus Zahnritzeln (36, 37) bestehendes Vorgelege (38)** aufweist, an deren angetriebenem **Kegelrad (22) resp. Zahnritzel (37)** der Permanentmagnet (17) zur Beeinflussung wenigstens eines berührungslos angenäherten und mit der Steuervorrichtung (S) elektrisch verbundener Sensor (16, 16') befestigt ist.

2. Arbeitsmaschine nach Anspruch 1, **dadurch gekennzeichnet, dass** der Permanentmagnet (17) durch das Betätigungsorgan (10) gegenüber dem/den ortsfest angeordneten Sensor/en (16, 16') beweglich ausgebildet ist.

3. Arbeitsmaschine nach Anspruch 1, **dadurch gekennzeichnet, dass** der/die Sensor/en (16, 16') durch das Betätigungsorgan (10) gegenüber dem ortsfest angeordneten Permanentmagnet (17) beweglich ausgebildet ist/sind.

4. Arbeitsmaschine nach einem der Ansprüche 2, **dadurch gekennzeichnet, dass** der Permanentmagnet (17) resp. der/die Sensor/en (16, 16') um eine Achse drehbar ausgebildet ist/sind.

5. Arbeitsmaschine nach Anspruch 3, **dadurch gekennzeichnet, dass** der Permanentmagnet (17) oder der/die Sensor/en (16, 16') an den/die Sensor/en (16, 16') resp. an den Permanentmagnet (17) annäher- und entfernbar ausgebildet ist.

6. Arbeitsmaschine nach einem der Ansprüche 1 bis 5, **dadurch gekennzeichnet, dass** der/die mit der Steuervorrichtung (S) verbundene/n Sensor/en (16, 16') mit einer elektrischen Spannung versehen ist/sind.

7. Arbeitsmaschine nach **einem der Ansprüche 1 bis 6, dadurch gekennzeichnet, dass** der mit Nord- und Südpol versehene Permanentmagnet (17) vorzugsweise als kreisrunde Scheibe ausgebildet ist, deren Umfang wenigstens einem Sensor (16, 16') zugewandt und an dem Lenkholm (8, 9) angeordnet ist.

8. Arbeitsmaschine nach Anspruch **7, dadurch gekennzeichnet, dass** dem Umfang des Permanentmagneten (17) zwei im Winkelabstand von vorzugsweise 90° verteilt angeordnete Sensoren (16, 16') zugeordnet resp. zugewandt sind.

9. Arbeitsmaschine nach **einem der Ansprüche 1 bis 8, dadurch gekennzeichnet, dass** der Sensor (16) über dem drehbaren Permanentmagnet (17) diesem zugewandt angeordnet ist.

10. Arbeitsmaschine nach einem der Ansprüche 1 bis 6, **dadurch gekennzeichnet, dass** der Permanentmagnet (17) ringförmig ausgebildet und mit dem drehbaren Betätigungsorgan (10) koaxial verbunden ist, und der/die Sensor/en (16, 16') am Umfang des ringförmigen Permanentmagneten (17) ortsfest angeordnet und durch eine Leitung (18, 18') mit der Steuervorrichtung (S) elektrisch verbunden sind.

11. Arbeitsmaschine nach einem der Ansprüche **1 bis 7, dadurch gekennzeichnet, dass** der scheibenförmig ausgebildete Permanentmagnet (17) mit dem drehbaren Betätigungsorgan (10) koaxial verbunden ist und der Sensor (16) vorzugsweise in der Drehachse des Permanentmagneten (17) und vor diesem angeordnet ist.

## Claims

1. Self-propelled, at least single-axle working machine (1) for driving and/or moving mounted implements and/or attached vehicles, which working machine (1) comprises a hydrostatic drive device (3) operatively connected to an internal combustion engine and formed of hydraulic motors (13, 14) associated with driven wheels (6, 7) of an axle (5) and a hydraulic pump (25, 26) controllably connected to a control device (S) and to the hydraulic motors (13, 14) by means of a control element, wherein the working machine (1) can preferably be switched to a forward (F) or to a backward direction of movement (F') and for manual guiding comprises two operating handles (11, 12) each associated with one hand of an operator, directed towards the latter, and secured to the free ends of cantilevered steering bars (8, 9) of a steering arrangement, wherein the steering bars (8, 9) are each secured at the ends directed away from the operating handles (11, 12) to a chassis (4) comprising an axle (5) arranged transversely to the direction of movement and wherein a manually operated actuating element (10) of a setting and adjusting device (20) connected to the control device (S) and acting on the drive device (3) for setting or changing the direction and speed of movement of the working machine (1) is arranged on at least one of the steering bars (8, 9) or connected to the chassis (4), **characterised in that** the setting and adjusting device (20) formed of a permanent magnet (17) generating a magnetic field and an electronic sensor (16) situated opposite without contact and influenced by the magnetic field comprises a bevel gear system (23) operatively connected to the actuating element (10) or an intermediate gear (38) consisting of pinions (36, 37), to the driven bevel gear (22) or pinion (37) of which the permanent magnet (17) is secured in order to influence at least one proximity sensor (16, 16') electrically connected to the control device (S).

2. Working machine according to claim 1, **characterised in that** the permanent magnet (17) is designed in such a manner that it can be moved relative to the fixedly arranged sensor or sensors (16, 16') by means of the actuating element (10).

3. Working machine according to claim 1, **characterised in that** the sensor or sensors (16, 16') is/are designed in such a manner that it/they can be moved relative to the fixedly arranged permanent magnet (17) by means of the actuating element (10).

4. Working machine according to either of claims 2 or 3, **characterised in that** the permanent magnet (17) or the sensor or sensors (16, 16') is/are designed to be rotatable about an axis.

5. Working machine according to claim 3, **characterised in that** the permanent magnet (17) or the sensor or sensors (16, 16') is/are designed in such a manner that it/they can be moved towards or away from the sensor or sensors (16, 16') or the permanent magnet (17).

6. Working machine according to one of claims 1 to 5, **characterised in that** the sensor or sensors (16, 16') connected to the control device (S) is/are provided with an electrical voltage.

7. Working machine according to one of claims 1 to 6, **characterised in that** the permanent magnet (17) provided with a north pole and a south pole is preferably designed as a circular disc, the circumference of which is directed towards at least one sensor (16, 16') and arranged on the steering bar (8, 9).

8. Working machine according to claim 7, **characterised in that** two sensors (16, 16') arranged with an angular spacing of preferably 90° are associated with or directed towards the circumference of the permanent magnet (17).

9. Working machine according to one of claims 1 to 8, **characterised in that** the sensor (16) is arranged above and directed towards the rotatable permanent magnet (17).

10. Working machine according to one of claims 1 to 6, **characterised in that** the permanent magnet (17) is annular and coaxially connected to the rotatable actuating element (10) and the sensor or sensors (16, 16') is/are fixedly arranged on the circumference of the annular permanent magnet (17) and electrically connected to the control device (S) by means of a line (18, 18').

11. Working machine according to one of claims 1 to 7, **characterised in that** the disc-shaped permanent magnet (17) is coaxially connected to the rotatable actuating element (10) and the sensor (16) is preferably arranged along the axis of rotation of the permanent magnet (17) and upstream thereof.

## Revendications

1. Machine de travail auto-tractée (1) ayant au moins un essieu pour faire fonctionner et/ou avancer des engins de travail montés et/ou des véhicules remorqués, laquelle machine de travail (1) présente un dispositif d'entraînement hydrostatique (3) connecté par entraînement à un moteur à combustion interne qui est réalisé par des moteurs hydrauliques (13, 14) associés à des roues motrices (6, 7) d'un essieu (5) et par une pompe hydraulique (25, 26) connectée de manière commandable par un actionneur à un dispositif de commande (S) et aux moteurs hydrauliques (13, 14), la machine de travail (1) pouvant être commutée de préférence dans une direction de marche avant (F) ou dans une direction de marche arrière (F') et présentant, pour le guidage manuel, une parmi deux poignées de commande (11, 12) associées chacune à une main d'un opérateur, tournées vers ce dernier, fixées aux extrémités libres de guidons de direction (8, 9) disposés en porte-à-faux, les guidons de direction (8, 9) étant fixés à chaque fois par les extrémités opposées aux poignées de commande (11, 12), à un châssis (4) présentant un essieu (5) disposé transversalement à la direction d'avance, et un organe d'actionnement à commande manuelle (10) d'un dispositif d'ajustement et de réglage (20) connecté au dispositif de commande (S) et agissant sur le dispositif d'entraînement (3) étant disposé au niveau d'au moins l'un des guidons de direction (8, 9) respectivement étant connecté au châssis (4) pour l'ajustement ou le changement de la direction d'avance et/ou de la vitesse d'avance de la machine de travail (1), **caractérisée en ce que** le dispositif d'ajustement et de réglage (20) formé d'un aimant permanent (17) générant un champ magnétique et d'un capteur électronique (16) opposé à celui-ci sans contact, influencé par le champ magnétique, présente un renvoi d'angle (23) en liaison d'entraînement avec l'organe d'actionnement (10) ou un réducteur (38) constitué de pignons dentés (36, 37), au niveau de la roue conique entraînée (22) duquel ou au niveau du pignon denté entraîné (37) duquel l'aimant permanent (17) est fixé pour influencer au moins un capteur (16, 16') rapproché sans contact et connecté électriquement au dispositif de commande (S).

2. Machine de travail selon la revendication 1, **caractérisée en ce que** l'aimant permanent (17) est réalisé de manière déplaçable par l'organe d'actionnement (10) par rapport au(x) capteur(s) (16, 16') disposé(s) fixement.

3. Machine de travail selon la revendication 1, **caractérisée en ce que** le/les capteur(s) (16, 16') est/sont réalisé(s) de manière déplaçable par l'organe d'actionnement (10) par rapport à l'aimant permanent (17) disposé fixement.

4. Machine de travail selon l'une quelconque des revendications 2, **caractérisée en ce que** l'aimant permanent (17), respectivement le/les capteur(s) (16, 16') est/sont réalisé(s) de manière à pouvoir tourner autour d'un axe.

5. Machine de travail selon la revendication 3, **caractérisée en ce que** l'aimant permanent (17) ou le/les capteurs (s) (16, 16') est réalisé de manière à pouvoir être rapproché et éloigné du/des capteurs (s) (16, 16') respectivement de l'aimant permanent (17).

6. Machine de travail selon l'une quelconque des revendications 1 à 5, **caractérisée en ce que** le/les capteur(s) (16, 16') connecté(s) au dispositif de commande (S) est/sont pourvu(s) d'une alimentation en tension électrique.

7. Machine de travail selon l'une quelconque des revendications 1 à 6, **caractérisée en ce que** l'aimant permanent (17) pourvu d'un pôle Nord et d'un pôle Sud est réalisé de préférence sous forme de disque circulaire dont la périphérie est tournée vers au moins un capteur (16, 16') et est disposée au niveau du guidon de direction (8, 9).

8. Machine de travail selon la revendication 7, **caractérisée en ce qu'**à la périphérie de l'aimant permanent (17) sont associés deux capteurs (16, 16') disposés de manière répartie sur une distance angulaire de préférence de 90°.

9. Machine de travail selon l'une quelconque des revendications 1 à 8, **caractérisée en ce que** le capteur (16) est disposé par-dessus l'aimant permanent rotatif (17) en étant tourné vers celui-ci.

10. Machine de travail selon l'une quelconque des revendications 1 à 6, **caractérisée en ce que** l'aimant permanent (17) est réalisé sous forme annulaire et est connecté coaxialement à l'organe d'actionnement rotatif (10), et le/les capteur(s) (16, 16') est/sont disposé(s) à la périphérie de l'aimant permanent de forme annulaire (17) et est/sont connecté(s) électriquement par une conduite (18, 18') au dispositif de commande (S).

11. Machine de travail selon l'une quelconque des revendications 1 à 7, **caractérisée en ce que** l'aimant permanent (17) réalisé en forme de disque est connecté coaxialement à l'organe d'actionnement rotatif (10) et le capteur (16) est disposé de préférence dans l'axe de rotation de l'aimant permanent (17) et devant celui-ci.
